# FASCICULE DE BREVET EUROPEEN

(11) **EP 1 960 321 B1**
(45) Date de publication et mention de la délivrance du brevet: **28.05.2014**
(21) Numéro de dépôt: 06831182.8
(22) Date de dépôt: 28.11.2006
(51) Int. Cl.: C04B 40/06, C04B 28/04, C04B 28/14, C04B 28/06, C04B 103/10

(54) **PROCEDE DE REALISATION DE PIECES ET OUVRAGES EN BETON**
VERFAHREN ZUR HERSTELLUNG VON BETONTEILEN UND BETONSTRUKTUREN
METHOD FOR PRODUCING CONCRETE PARTS AND STRUCTURE

(30) Priorité: 28.11.2005 FR 0512011
(43) Date de publication de la demande: 27.08.2008
(73) Titulaire: KERNEOS, 92200 Neuilly-sur-Seine Cedex (FR)
(72) Inventeur: TESTUT, Michel, F-69740 Genas (FR); SABIO, Serge, F-38540 Saint Just Cheleyssin (FR); FRYDA, Hervé, F-38300 Meyrie (FR)
(74) Mandataire: Catherine, Alain
(86) Numéro de dépôt international: PCT/FR2006/002598
(87) Numéro de publication internationale: WO 2007/060340

(56) Documents cités:
- FR-A- 2 810 314
- US-A- 4 455 171

## Description

### DOMAINE TECHNIQUE

L'invention a pour objet un procédé de réalisation de pièces et ouvrages en béton utilisant des compositions de liants rapides.

Par liants rapides pour mortier ou béton, on entend des liants à prise et durcissement rapides à base de ciments portland, aluminates de calcium et sulfates de calcium. Les bétons utilisant de tels liants dans leurs compositions, une fois mis en oeuvre, acquièrent des caractéristiques mécaniques élevées à court terme après ajout d'un composant désigné comme déclencheur; ils ont de préférence une résistance en compression RC d'au moins 1 MPa à 2 heures après l'ajout du déclencheur à une première composition. Lorsque l'ajout du déclencheur a lieu au plus tard 2 heures après la fin du malaxage de la première composition, la résistance mécanique en compression Rc est d'au moins 1 MPa à 4 heures, comptées à partir de la fin du malaxage de la première composition.

Ces bétons sont des bétons fluides ou autocompactants qui ont une durée de maintien d'ouvrabilité d'au moins 1 heure avant l'ajout du déclencheur, et d'au moins d'1/2 heure après l'ajout du déclencheur.

L'ouvrabilité des bétons fluides est mesurée par la hauteur d'affaissement au cône d'Abrams - ou valeur de slump - (selon la norme française NF P 18-451, de décembre 1981) et on estime qu'un béton est fluide lorsque cet affaissement est d'au moins 15 cm, de préférence au moins 18 cm.

L'ouvrabilité des bétons autocompactants (désignés aussi par autoplaçants) est généralement mesurée à partir du "slumpflow", selon le mode opératoire décrit dans "Specification and Guidelines for Self Compacting Concrete, EFNARC, February 2002, p19-23"; la valeur de l'étalement est, en général, au minimum de 650 mm pour les bétons autocompactants et au maximum de 800 mm.

Dans le cas des mortiers, la consistance peut se mesurer à partir du "slumpflow" selon le mode opératoire décrit dans "Specification and Guidelines for Self Compacting Concrete, EFNARC, February 2002, p19-23", à l'aide d'un cône à l'échelle ½. Les mortiers seront considérés comme équivalents à des bétons fluides quand la valeur d'étalement sera supérieure à 200 mm, autoplaçants au-delà de 300 mm.

L'invention concerne les bétons, et plus particulièrement les bétons fluides ou autocompactants, destinés à la réalisation de pièces et ouvrages, qu'il s'agisse de pièces préfabriquées en usine, ou des réalisations sur chantiers, comme par exemple des voiles de béton, dalles, etc..

### ARRIERE-PLAN TECHNOLOGIQUE

FR-A-2810314 décrit un liant rapide pour béton autocompactant comprenant du ciment Portland, de l'aluminate de calcium, du sulfate de calcium, un accélérateur, un retardateur et un agent superplastifiant du type polyphosphonate polyox. Dans ce document, il est indiqué que ce liant permet d'avoir une durée d'ouvrabilité supérieure à 1 heure, de pomper le béton grâce à cette formule autocompactante, tout en ayant des résistances mécaniques en compression élevées à partir de 4 heures après la fin du malaxage, y compris à des températures comprises entre 5 et 35°C. Les applications décrites dans ce document sont la réparation urgente d'ouvrages, le soutènement provisoire de tunnels, galeries, ou autres ouvrages analogues.

Ce document FR-A-2810314 décrit des compositions de liant rapide pour bétons autocompactants qui sont réalisées par mélange en une seule étape de l'ensemble des composants, chaque composition conduisant à un compromis donné durée de maintien d'ouvrabilité/acquisition rapide de résistance souhaité. Chaque modification de ce compromis implique de reformuler une nouvelle composition.

Le document EP-A-0769482 décrit des compositions de liants utilisés pour l'application des bétons projetés; mais l'ajout à celles-ci d'un composant accélérateur conduit à un durcissement ultra rapide, sans période de maintien d'ouvrabilité après ajout de l'accélérateur. Ceci rend impossible la mise en oeuvre de telles compositions dans toutes les applications en usine et sur chantier ou le béton est mis en place par coulage.

Le document US-4.455.171 décrit un procédé pour produire une composition de garniture à base d'un ciment durci à haute teneur en alumine. Le procédé met en particulier en oeuvre un déclencheur de prise, tel que de l'hydroxyde de lithium.

Il existe cependant le besoin d'un procédé de réalisation de pièces et ouvrages en béton utilisant des compositions de bétons à base de liants rapides, qui permettrait de dissocier la période durant laquelle il est nécessaire de maintenir l' ouvrabilité de la composition depuis la fin du malaxage jusqu'au moment du coulage, par exemple lorsqu'il s'agit de béton prêt à l'emploi nécessitant une certaine durée de transport avant coulage, de la période ou l'on souhaite déclencher un durcissement rapide afin d'obtenir une résistance minimale à court terme, suffisante, par exemple, pour permettre le décoffrage.

### RESUME DE L'INVENTION

L'invention fournit donc un procédé de réalisation de pièces et ouvrages en béton tel que décrit dans le jeu de revendications. En particulier, le procédé comprend les étapes telles que décrites dans la revendication 1.

Selon un mode de réalisation, l'étape (i) est une étape de gâchage dans laquelle on réalise la première composition de béton et qui comprend les étapes suivantes :
(a) on réalise une composition de béton comprenant, sur la base du liant rapide :
   - 70 à 95% de ciment Portland ;
   - le système retardateur ; et
   - un superplastifiant comprenant un polymère du type polyphosphonate polyox, ou un mélange de polymères type polyphosphonate polyox et type polycarboxylate polyox ; puis
(b) on ajoute, sur la base du liant rapide :
   - 10 à 25% d'un système accélérateur à base d'alumine Al₂O₃, de chaux CaO et de sulfate SO₃ ; les sulfates peuvent être, par exemple, des sulfates métalliques, alcalins, alcalino-terreux, des sulfates organiques, ou des mélanges ; préférentiellement , le système accélérateur sera à base d'aluminate de calcium et de sulfate de calcium.

Selon un mode de réalisation, le procédé comprend les étapes suivantes :
(i) on réalise par gâchage dans une centrale à béton une première composition de béton comprenant un liant rapide ;
   puis
(ii) on ajoute un système déclencheur ; et
(iii) on coule immédiatement le béton après l'étape (ii) d'ajout du système déclencheur.

L'étape (ii) peut être mise en oeuvre dans un camion-toupie.

L'étape (iii) de coulage de la seconde composition de béton dans le coffrage peut se faire avec une seconde composition de béton présentant (a) une valeur d'affaissement au slump test de 15 à 24 cm, de préférence de 18 à 22 cm ou (b) une valeur d'étalement au slumpflow de 580 à 750 mm, de préférence de 650 à 750 mm.

Selon un mode de réalisation, la seconde composition de béton présente une résistance mécanique en compression Rc d'au moins 1MPa à 2 heures après l'étape (ii); lorsque l'ajout du déclencheur a lieu au plus tard 2 heures après l'étape (i), la résistance mécanique en compression Rc est d'au moins 1 MPa à 4 heures après l'étape (i).

Selon un mode de réalisation, la première composition de béton a une durée de maintien de l'ouvrabilité d'au minimum 1 heure après l'étape (i) de gâchage.

Selon un mode de réalisation, la seconde composition de béton a une durée de maintien d'ouvrabilité d'au minimum 30 minutes après l'étape (ii) de gâchage.

L'invention a aussi pour objet l'utilisation d'un système déclencheur par ajout à une première composition de béton rapide pour un procédé de réalisation d'objets en béton telle que définie dans la présente invention.

L'invention a aussi pour objet la préparation d'une première composition de béton rapide destinée à être additionnée d'un système déclencheur par ajout à cette première composition pour un procédé de réalisation de pièces et ouvrages en béton, telle que définie dans la présente invention.

L'invention permet ainsi de réaliser un béton de base ayant une longue durée de maintien d'ouvrabilité auquel il suffit d'ajouter au moment voulu, par exemple juste avant coulage, un autre composant déclenchant un durcissement, rapide et permettant l'acquisition de résistance mécanique à court terme. Il est ainsi possible à partir d'une seule composition de béton de base d'aboutir aux différents compromis souhaités en terme de durée de maintien d'ouvrabilité/acquisition rapide de résistances. L'invention offre ainsi une solution polyvalente qui s'applique aux ciments décrits dans la norme européenne EN 197-1.

### DESCRIPTION DE MODES DE REALISATION DE L'INVENTION.

L'invention est maintenant décrite plus en détails dans la description qui suit.

L'invention est basée sur l'ajout différé d'un système déclencheur à une première composition de béton, avant sa mise en oeuvre.

Le liant entrant dans la composition du béton frais est tel que décrit dans la revendication 1.

De préférence, le liant comprend 10 à 25% en poids d'un système accélérateur à base d'aluminate de calcium et de sulfate de calcium.

Le ciment Portland est classique et conforme aux familles décrites dans la norme européenne EN 197-1.

Avantageusement, le ciment Portland est un ciment rapide (dit de type R), préférentiellement broyé à une finesse d'au moins 4000 cm²/g. Le ciment peut être du type HRI (à Haute Résistance Initiale) . On pourra utiliser par exemple un ciment CEMI 52.5 N ou R, CEM2 de type 32.5, 32.5 R, 42.5 ou 42.5 R. Le taux d'alcalins solubles sera de préférence inférieur à 1% en poids exprimé en équivalent Na₂O. L'invention s'applique aux ciments décrits dans la norme européenne EN 197-1.

La quantité de ciment Portland est en général, par rapport au poids du liant, typiquement environ 80%.

Le système accélérateur est à base d'alumine Al₂O₃, de chaux CaO et de sulfate SO₃.

Sa composition est en général la suivante, en poids :

| | |
|---|---|
| Alumine Al₂O₃ : | 35 à 50% |
| Chaux CaO: | 10 à 50% |
| Sulfate (exprimé en SO₃): | 5 à 30% |

Préférentiellement, le système accélérateur sera à base d'aluminate de calcium et de sulfate de calcium.

L'aluminate de calcium susceptible d'être utilisé dans l'invention comprend les phases minéralogiques CA et/ou C3A et/ou C12A7.

Le sulfate de calcium peut être sous toute forme appropriée, à savoir semi-hydrate, dihydrate, anhydrite (II ou III), etc. On utilisera par exemple de l'anhydrite.

Le rapport massique aluminate de calcium/sulfate de calcium est compris en général entre 1:4 et 4:1, de préférence entre 1:2 à 2:1.

La quantité du système accélérateur dépend de la température d'utilisation du béton, du procédé exact de mise en oeuvre, du niveau de résistances à obtenir, etc. Elle est en général de 5 à 40% et de préférence de 15 à 25%, typiquement environ 20% par rapport au poids du liant rapide.

Le système retardateur est tout système classique. Notamment il peut être de type carboxylique, sous formé d'acide carboxylique, notamment citrique, tartrique, gluconique ou autre, ou de type borique, ou sous forme des sels correspondants. Eventuellement un autre additif minéral apportant ou consommant du calcium peut également être utilisé; on peut citer les carbonates ou fluorures de sodium, potassium, lithium, strontium ou baryum, ou encore les complexants du calcium comme l'EDTA.

La quantité du système retardateur dépend de la durée du maintien d'ouvrabilité souhaité, de la température d'utilisation du béton, du procédé exact de mise en oeuvre, du niveau de résistances à obtenir, etc. Les quantités sont en général, par rapport au poids cumulé du ciment Portland et du système accélérateur, de 0,05 à 5% et de préférence de 0,1 à 1%, typiquement environ 0,3 à 0,45%.

Le superplastifiant comprend un polyphosphonate polyox correspondant au composé décrit dans FR-A-2810314 et FR-A-2696736 ainsi que FR-A-2689895, documents auxquels il est explicitement renvoyé pour une description détaillée. Par exemple, le polyphosphonate polyox peut être constitué d'un composé organique hydrosoluble ou hydrodispersable, comportant au moins un groupement amino-di (alkylène-phosphonique) et au moins une chaîne polyoxyalkylée ou au moins un de ses sels.

Il peut également comprendre un mélange de polymères type polyphosphonate polyox et notamment de type polycarboxylate polyox. Les superplastifiants de type polycarboxylate polyox sont généralement connus, et on peut faire référence par exemple à la description des brevets US20030127026 (US-P-6858074) et US20040149174.

La quantité du superplastifiant est en général, par rapport au poids cumulé du ciment portland et du système accélérateur, de 0,5 à 5% et de préférence de 1 à 3%, typiquement environ de 2 à 2,5%.

Le béton comprenant ce superplastifiant peut être de consistance fluide ou autocompactante.

Le déclencheur peut être choisi dans le groupe consistant en:
- suspension aqueuse comprenant (i) au moins un aluminate de calcium, (ii) de 0,5 à 4 %, de préférence de 0,6 à 2,3%, en poids par rapport au poids total du ou des aluminates de calcium, d'un inhibiteur de prise des ciments alumineux, et (iii) au moins un agent anti-sédimentation; une telle suspension est décrite dans FR-A-2849440, de Lafarge Aluminates, auquel il est renvoyé pour plus de détails;
- une alumine de transition; une telle alumine de transition est disponible par exemple sous le nom de RHOXIMAT SA 502 de la Société Rhodia;
- un gel d'hydroxyde d'alumine; un tel gel d'hydroxyde d'alumine est disponible, par exemple, sous le nom de GECEDRAL BZ 111 de la Société Degussa;
- un mélange de ceux-ci.

La quantité du déclencheur dépend de la température du béton, de la quantité du système accélérateur utilisée, du niveau de la résistance précoce souhaité;. Il est ajouté, par rapport aux poids cumulés du ciment Portland et du système accélérateur, en général en une quantité de 1 à 10% et de préférence de 2 à 5% typiquement environ 2,5 à 3,5%.

Les composés de la composition finale de béton peuvent être introduits par exemple dans l'ordre suivant:
- selon un premier mode de réalisation, on gâche le ciment Portland et le système accélérateur, le retardateur et le superplastifiant, puis après un temps choisi on ajoute le déclencheur;
- selon un second mode de réalisation, on gâche le ciment et le superplastifiant, puis après un temps choisi on ajoute le système accélérateur et le retardateur puis après encore un temps choisi on ajoute le déclencheur.

On préférera le premier mode de réalisation, car les différents constituants (ciment, superplastifiant, accélérateur, retardateur) pourront alors être ajoutés au niveau de la centrale à béton, tandis que le déclencheur pourra être ajouté au niveau du camion-toupie avant le départ ou au cours du chemin, ou au niveau du chantier, juste avant coulage du béton.

Selon le premier mode de réalisation, on peut ajouter le déclencheur à partir de 10 minutes après le malaxage des autres constituants, de préférence à partir de 60 minutes après le malaxage des autres constituants (gâchage de l'étape (i)), et au plus tard 8 heures après.

On peut aussi ajouter le déclencheur immédiatement avant l'opération de coulage du béton (l'étape (ii) est mise en oeuvre immédiatement avant l'étape (iii) de coulage du béton), et ce quel que soit le temps qui s'est écoulé depuis le gâchage en centrale à béton, "immédiatement" devant s'entendre comme compris entre 5 et 15 minutes avant le démarrage de l'opération de coulage.

Selon le second mode de réalisation, on peut ajouter l'accélérateur et le retardateur 10 à 90 minutes, de préférence 10 à 45 minutes après le gâchage. On peut ajouter le déclencheur à partir de 10 minutes après le malaxage des autres constituants.

On peut aussi, comme ci-dessus, ajouter le déclencheur immédiatement avant l'opération de coulage, et ce quel que soit le temps qui s'est écoulé depuis la première addition de l'accélérateur et du retardateur. Comme ci-dessus, il est donc possible d'ajouter le déclencheur immédiatement avant l'opération de coulage du béton, "immédiatement" devant s'entendre comme compris entre 5 et 15 minutes avant, le démarrage de l'opération de coulage.

Quel que soit le mode de réalisation, l'ajout du déclencheur ne se fait pas, en général, plus de 8 heures comptées à partir du gâchage du ciment Portland.

De façon générale, le rapport en poids d'eau efficace sur liant sec est compris en général entre 0,35 et 0,50.

La composition finale comprend en général des granulats classiques (sables, graviers et/ou cailloux). Préférentiellement, les constituants de la composition finale ont une taille inférieure ou égale à 20 mm. La composition peut ainsi être pompée facilement.

Le rapport du poids sec de granulats sur celui du liant est compris en général entre 4 et 5.

Les compositions de béton selon l'invention sont faciles à mettre en oeuvre. Elles ont une rhéologie adaptée, impliquant préférentiellement une durée d'ouvrabilité (après gâchage) d'une heure minimum et d'une heure et demie à deux heures maximum et un durcissement très rapide.

Le maintien de l'ouvrabilité se caractérise notamment:
- soit par un maintien de la valeur d'affaissement du béton au cône d'Abrams correspondant à la valeur typique d'un béton fluide d'au minimum 15 cm
- soit, dans le cas d'un béton autocompactant, par un maintien de la valeur d'étalement au slump flow du béton correspondant à la valeur typique d'un béton autocompactant d'au minimum 650 mm.
- soit dans le cas d'un mortier par un maintien de la valeur d'étalement au slump flow correspondant à une valeur d'au minimum 200 mm.

L'invention fournit donc une composition de béton pouvant avoir une résistance en compression d'au moins 1 MPa 2 heures après l'ajout du déclencheur à une première composition. Lorsque l'ajout du déclencheur a lieu au plus tard 2 heures après la fin du malaxage de la première composition, la résistance mécanique en compression Rc est d'au moins 1 MPa à 4 heures, comptées à partir de la fin du malaxage de la première composition. Elle est mesurée sur des éprouvettes cylindriques de dimension 16 cm x 32 cm.

Ces deux propriétés de maintien d'ouvrabilité et de fortes résistances à court terme permettent notamment de réaliser une composition de béton précurseur en centrale de béton et par exemple de la transporter ensuite sur un chantier par camion-toupie, la composition durcissant rapidement une fois mise en oeuvre, après ajout du déclencheur. Dans cet exemple le système accélérateur est de préférence ajouté dans la centrale à béton. Ces qualités du liant permettent également de le pomper mécaniquement grâce à sa fluidité et de le couler ou pomper dans un coffrage en obtenant un durcissement rapide.

L'invention vise tout particulièrement un liant rapide pour bétons fluides ou autocompactants, facilement pompables ou coulables, se mettant en place dans les coffrages sans vibration, dans le cas des bétons autocompactants. L'invention est utile pour la fabrication pièces et ouvrages en béton, qu'il s'agisse de pièces préfabriquées en usine, ou des réalisations sur chantiers, comme par exemple des voiles de béton, dalles, etc., à des températures extérieures comprises notamment entre -5°C et 30°C, en particulier inférieure à 10°C.

### EXEMPLES

Les exemples suivants illustrent l'invention sans la limiter.

### Exemple 1.

On prépare une première composition de mortier (en g pour 1 litre de mortier):

| | |
|---|---|
| Ciment CEM 1 52.5 | 517 g |
| Sable 0/4 | 1327 g |
| Filler BL 200 | 129 g |
| SECAR 51, de Lafarge Aluminates | 54,8 g |
| Anhydrite | 34,2 g |

Superplastifiant OPTIMA 175 de le Société CHRYSO: en poids par rapport au poids du

| | |
|---|---|
| Ciment CEM 1 + SECAR 51 | 1,2% |
| Acide citrique: | 2,3 g |
| Eau totale | 267 g |

(Le superplastifiant OPTIMA 175 a un extrait sec de 30%, mesuré selon la norme EN 480-8).

Quatre mélanges de mortier frais sont réalisés successivement selon cette première composition.

On réalise ensuite une deuxième composition en ajoutant le déclencheur à chaque mélange, à une échéance donnée, comptée à partir de la fin du malaxage, à raison d'une quantité de 14,7 g.

Le déclencheur est une suspension aqueuse ayant la composition suivante, en % poids:

| | |
|---|---|
| Eau | : 38, 36 % |
| Acide borique | : 2,13 % |
| Plasticizer CP10 | : 0,39 % |
| Ciment alumineux | : 58,81 % |
| Gomme Xanthane | : 0,16 % |
| Biocide K 35R | : 0,15% |

Le Plasticizer CP 10 est un produit commercialisé par BASF. Le Biocide K 35R est un produit commercialisé par PROGIVEN.

Pour chaque mortier, on va mesurer l'étalement obtenu au flow test en mm au bout de 15, 30, 60 90 minutes comptées à partir de la fin du malaxage de la première composition.

Les éprouvettes destinées à la mesure des résistances mécaniques en compression Rc sont réalisées immédiatement après l'ajout du déclencheur.

L'échéance pour la mesure de la résistance mécanique à 4h et 5H30 est comptée à partir de la fin du malaxage de la première composition.

La RC 2 est mesurée 2 heures après l'ajout du déclencheur.

La température des essais est de 15°C.

Les résultats obtenus sont les suivants:

**Tableau 1**

| Echéance Ajout déclencheur | Flow à 15 mn | Flow à 30 mn | Flow à 60 mn | Flow à 90 mn | Flow à 120 mn | Rc 2h | Rc 4h | Rc 5h30 |
|---|---|---|---|---|---|---|---|---|
| 30 mn | 300 | 330 | 315 | 210 | N.M* | 1,5 | 4 | 12 |
| 60 mn | 300 | 300 | 285 | 250 | 150 | 1,3 | 2 | 11 |
| 90 mn | 300 | 300 | 290 | 250 | 200 | 1,1 | 1,5 | 8,5 |

| | | | | | | | | |
|---|---|---|---|---|---|---|---|---|
| N.M*: mortier raide; flow non mesurable. | | | | | | | | |

Ces résultats mettent en évidence que:
- quelle que soit l'échéance à laquelle on ajoute le déclencheur, les mortiers restent fluides/autoplaçants 30 minutes au minimum après l'ajout du déclencheur.
- malgré ce long maintien d'ouvrabilité, on a une acquisition à court terme de résistance mécanique d'au moins 1MPa à 2heures après l'ajout du déclencheur, dans tous les cas d'au moins 1MPa à 4 heures comptées à partir de la fin du malaxage de la première composition.

### Exemple 2.

On réalise une première composition de mortier (en g pour 1 litre de mortier) :

| | |
|---|---|
| Ciment CEM 1 52.5 N | 507 g |
| Sable 0/4 | 1327 g |
| Filler BL 200 | 129 g |
| SECAR 51, de Lafarge Aluminates | 63,7 g |
| Anhydrite | 39,8 g |

Superplastifiant OPTIMA 175 de le Société CHRYSO: en poids par rapport au poids du ciment

| | |
|---|---|
| CEM 1 + SECAR 51 | 1,2% |
| Acide citrique: | 2,3 g |
| Eau totale | 267 g |

Quatre mélanges de mortier frais sont réalisés successivement, selon cette composition.

On réalise ensuite une deuxième composition en ajoutant le déclencheur, qui est celui de l'exemple 1, à l'échéance de 60 minutes, comptée à partir de la fin du malaxage de la première composition.

Les étalements au flow test en mm sont mesurés aux échéances de 15, 90 et 120 minutes, comptées à partir de la fin du malaxage de la première composition.

Les éprouvettes destinées à la mesure des résistances mécaniques en compressions Rc sont réalisées dès la fin du malaxage avec le déclencheur.

L'échéance pour la mesure de la résistance mécanique à 4h, 5H30 et 24H, est comptée à partir de la fin du malaxage de la première composition.

La RC 2 est mesurée 2H après l'ajout du déclencheur

La température des essais est de 18°C.

Les résultats obtenus sont les suivants:

**Tableau 2**

| Quantité ajoutée de déclencheur | Flow à 15 mn | Flow à 90 mn | Flow à 120 mn | Rc 2 h | Rc Mpa 4 h | Rc MPa 5h30 | Rc MPa 24h |
|---|---|---|---|---|---|---|---|
| 0 | 220 | 140 | 60 | 0,3 | 1 | 10 | 15,5 |
| 8,2 g | 220 | 165 | 60 | 1 | 2,5 | 11 | 15,5 |
| 16,3 g | 220 | 200 | 75 | 1,7 | 5 | 11 | 15 |
| 22 g | 220 | 220 | 90 | 1,5 | 4 | 10 | 14 |

Ces résultats mettent en évidence l'influence de la quantité de déclencheur sur la durée de maintien de l'ouvrabilité et sur la quantité minimale qui permet de satisfaire au compromis durée de maintien de l'ouvrabilité/résistance mécanique.

### Exemple 3.

Une première série d'essais est effectués à 5°C.

On réalise trois premières compositions B1, B2, B3, de bétons fluides ayant les compositions suivantes pour 1 m³:

| | |
|---|---|
| Ciment CEM 1, 52,5 | 294 kg |
| Sable 0/4 Le Vernet | 750 kg |
| Granulat 4/14 mm | 1050 kg |
| Filler | 100 kg |
| SECAR 51: | 60,3 kg |
| Anhydrite: | 37,7 kg |
| Acide citrique: | 1,36 kg |
| Optima 175 | 5,00 kg pour B1 |
| | 6,53 kg pour B2 |
| | 5 83 kg pour B3 |
| Eau totale | 175 litres |

Ces bétons sont réalisés, chacun avec un ciment CEM 1 52,5 différent, ayant les caractéristiques suivantes:

**Tableau 3**

| Réf Béton | Ciment CEM1 | C3S % | C2S % | C3A % | C4AF % | K soluble % | Na soluble% |
|---|---|---|---|---|---|---|---|
| B1 | Le Havre | 61,4 | 12,1 | 10,2 | 5,2 | 0,21 | 0,11 |
| B2 | La Couronne | 58,0 | 14,3 | 7,6 | 8,4 | 0,71 | 0,05 |
| B3 | Val d'Azergues | 58,5 | 15,4 | 0,4 | 14,5 | 0,62 | 0,09 |

On réalise ensuite les deuxièmes compositions de bétons en ajoutant le déclencheur qui est celui de l'exemple 1; il est introduit à l'échéance de 1 heure après la fin du malaxage de l'ensemble des constituants précédents.

La quantité pour chaque béton est de 9 kg/m³.

Pour chaque béton, on va ensuite mesurer l'affaissement obtenu au cône d'Abrams en cm au bout de 15, 90 et 120 minutes comptées à partir de la fin du malaxage de la première composition, et réaliser dès la fin de l'ajout du déclencheur les éprouvettes destinées à la mesure des résistances mécaniques en compression Rc.

L'échéance pour la mesure de la résistance mécanique à 4h, 5H30 et 24H, est comptée à partir de la fin du malaxage de la première composition.

La RC 2 est mesurée 2H après l'ajout du déclencheur.

Les résultats obtenus sont les suivants:

**Tableau 4**

| Réf Béton | Slump 15 mn | Slump 90 mn | Slump 120 mn | Rc 2 h | Rc MPa 4 h | Rc MPa 5h30mn | Rc MPa 24 h |
|---|---|---|---|---|---|---|---|
| B1 | 24 | 23 | 21 | 1 | 2 | 12 | 17 |
| B2 | 24 | 22 | 22 | 1,5 | 3,5 | 15,5 | 22 |
| B3 | 24 | 22 | 22 | 1,1 | 2 | 14 | 23 |

Une seconde série d'essais est effectuée à 20°C.

On réalise quatre premières compositions B4, B5, B6, B7, de bétons fluides avant les compositions suivantes pour 1 m³.

| | |
|---|---|
| Ciment CEM 1, 52,5 | 294 kg |
| Sable 0/4 Le Vernet | 750 kg |
| Granulat 4/14 mm | 1050 kg |
| Filler | 100 kg |
| SECAR 51 | 27,44 kg |
| Anhydrite | 17,18 kg |
| Acide citrique | 1,46 kg |
| Optima 175 | 4,77 kg pour B4 |
| | 5,70 kg pour B5 |
| | 5,60 kg pour B6 |
| | 7,24 kg pour B7 |
| Eau totale | 175 litres |

Ces bétons sont réalisés, chacun avec un ciment CEM 1 52,5 différent, ayant les caractéristiques suivantes (les trois premiers sont ceux mentionnés dans le tableau 4):

**Tableau 5**

| Réf Béton | Ciment CEM1 | C3S % | C2S % | C3A % | C4AF % | K soluble % | Na soluble% |
|---|---|---|---|---|---|---|---|
| B4 | Le Havre | 61,4 | 12,1 | 10,2 | 5,2 | 0,21 | 0,11 |
| B5 | La Couronne | 58,0 | 14,3 | 7,6 | 8,4 | 0,71 | 0,05 |
| B6 | Val d'Azergues | 58,5 | 15,4 | 0,4 | 14,5 | 0,62 | 0,09 |
| B7 | Saint Pierre LC | 54,8 | 16,6 | 7,3 | 9,1 | 0,62 | 0,10 |

On réalise ensuite les deuxièmes compositions de bétons en ajoutant le déclencheur qui est celui de l'exemple 1; il est introduit à l'échéance de 1 heure après la fin du malaxage de l'ensemble des constituants précédents.

La quantité pour chaque béton est de 9 kg/m³.

Pour chaque béton, on va ensuite mesurer l'affaissement obtenu au cône d'Abrams en cm au bout de 15, 90 et 120 minutes comptées à partir de la fin du malaxage de la première composition, et réaliser dès la fin de l'ajout du déclencheur, les éprouvettes destinées à la mesure des résistances mécaniques en compression Rc.

L'échéance pour la mesure de la résistance mécanique à 4h, 5H30 et 24 H est comptée à partir de la fin du malaxage de la première composition.

La RC 2 est mesurée 2H après l'ajout du déclencheur.

Les résultats obtenus sont les suivants:

**Tableau 6**

| Réf Béton | Slump à 15 mn | Slump à 90 mn | Slump à 120 mn | Rc 2 h | Rc MPa 4 h | Rc MPa 5h30mn | Rc MPa 24 h |
|---|---|---|---|---|---|---|---|
| B1 | 24 | 24 | 13 | 1,7 | 4 | 8 | 10 |
| B2 | 23 | 24 | 12 | 4 | 7 | 11 | 12 |
| B3 | 24 | 22 | 21 | 2,7 | 6 | 10 | 12 |
| B4 | 19 | 20 | 20 | 2,5 | 5 | 9 | 12 |

Ces deux séries d'essais mettent en évidence que:
- à 5°C et 20°C, les bétons obtenus restent fluides au minimum 30 minutes comptées à partir de la fin du malaxage avec le déclencheur;
- on acquiert une résistance mécanique d'au moins 1MPa à 2heures après l'ajout du déclencheur, dans tous les cas d'au moins 1MPa à 4 heures comptées à partir de la fin du malaxage de la première composition;
- ces caractéristiques sont obtenues avec des ciments ayant des compositions minéralogiques et des teneurs en alcalins solubles très différentes; ceci montre la polyvalence du système.

### Exemple 4.

Des essais ont été effectués avec différents ciments CEM 2 de LAFARGE, soit:
- Réf C1 - CEM 2/A-S 52,5 N La Malle
- Réf C2 - CEM 2/B-M (S-LL) 42,5 Le Teil
- Réf C3 - CEM 2/B-LL 32,5R Val d'Azergues
- Réf C4 - CEM 2/B-LL 42,5N Val d'Azergues
- Réf C5 - CEM 2/B-LL 32,5R Le Havre

Avec chaque ciment, on prépare différentes premières compositions de mortiers contenant chacune (en g pour 1 litre de mortier) les composants suivants:

| | |
|---|---|
| Ciment CEM 2 | 512 g |
| Sable 0/4 St Bonnet | 1327 g |
| Filler BL 200 | 129 g |
| Eau totale | 267 g |

Deux séries d'essais sont réalisées à 20°C.

Pour chaque série on complète les premières compositions avec les autres composants tels que définis dans le Tableau 7 (en g pour 1 litre de mortier).

**Tableau 7**

| Première série d'essai | | | | |
|---|---|---|---|---|
| Réf CEM 2 | SECAR 51 | Anhydrite | Ac.Citrique | Optima 175 |
| C1 | 57,8 | 36,2 | 2,4 | 16,13 |
| C2 | 57,8 | 36,2 | 2,4 | 14,23 |
| C3 | 57,8 | 36,2 | 2,4 | 14,80 |
| C4 | 57,8 | 36,2 | 2,4 | 15,20 |
| | | | | |

| Deuxième série d'essais | | | | |
|---|---|---|---|---|
| Réf CEM 2 | SECAR 51 | Anhydrite | Ac.Citrique | Optima 175 |
| C2 | 35,7 | 22,3 | 2,11 | 10,43 |
| C3 | 35,7 | 22,3 | 2,11 | 12,33 |
| C5 | 35,7 | 22,3 | 2,11 | 12,33 |

On réalise ensuite les deuxièmes compositions de mortiers en ajoutant le déclencheur qui est celui de l'exemple 1; il est introduit à l'échéance de 1 heure après la fin du malaxage de l'ensemble des constituants des premières compositions.

La quantité pour chaque mortier est de 14,7 g.

Pour chaque mortier, on va mesurer ensuite l'étalement obtenu au flow test en mm au bout de 15, 60, 90 et 120 minutes comptées à partir de la fin du malaxage de la première composition et réaliser dés la fin du malaxage de la deuxième composition, les éprouvettes destinées à la mesure des résistances mécaniques en compression Rc.

L'échéance pour la mesure de la résistance mécanique à 4h et 5H30 est comptée à partir de la fin du malaxage de la première composition.

La RC 2 est mesurée 2H après l'ajout du déclencheur.

Les résultats obtenus sont les suivants:

**Tableau 8**

| | Réf CEM2 | Flow mm à 15 mn | Flow mm à 60 mn | Flow mm à 90 mn | Flow mm à 120 mn | Rc 2 h | Rc MPa 4 h | RC MPa 5h30mn |
|---|---|---|---|---|---|---|---|---|
| 1ére série d'essais | C1 | 330 | 320 | 295 | 260 | 1 | 2,4 | 10,4 |
| | C2 | 365 | 285 | 285 | 215 | 2 | 3,5 | 3,8 |
| | C3 | 330 | 300 | 135 | NM | 6 | 13,8 | 19,5 |
| | C4 | 305 | 235 | 225 | 225 | 5 | 10,7 | 18,7 |
| | | | | | | | | |
| 2ème série d'essais | C2 | 340 | 275 | 265 | 140 | 2,3 | 4,8 | 11,3 |
| | C3 | 300 | 295 | 225 | 145 | 1,5 | 3,8 | 6,3 |
| | C5 | 330 | 265 | 200 | 195 | 0,7 | 1,8 | 4,3 |

Ces résultats mettent en évidence que l'on satisfait aux exigences requises avec les différents ciments CEM 2 utilisés.

## Revendications

1. Procédé de réalisation de pièces et ouvrages en béton, comprenant les étapes suivantes:
(i) on fournit une première composition de béton à base d'un liant rapide comprenant:
- 70 à 85% en poids de ciment Portland;
- 10 à 25% en poids d'un système accélérateur à base d'alumine Al₂O₃, de chaux CaO et de sulfate SO₃ sous forme d'aluminate de calcium et de sulfate de calcium;
- un système retardateur; et
- un superplastifiant comprenant un polymère du type polyphosphonate polyox, ou un mélange de polymères type polyphosphonate polyox et type polycarboxylate polyox;
le rapport en poids d'eau efficace sur liant sec est compris entre 0,35 et 0,50, puis
(ii) on ajoute un système déclencheur pour former une seconde composition de béton choisi dans le groupe consistant en:
- une suspension aqueuse comprenant :
(i) au moins un aluminate de calcium,
(ii) de 0,5 à 4 %, de préférence de 0,6 à 2,3%, en poids par rapport au poids total du ou des aluminates de calcium d'un inhibiteur de prise des ciments alumineux, et
(iii) au moins un agent anti-sédimentation,
- une alumine de transition;
- un gel d'hydroxyde d'alumine;
- un mélange de ceux-ci; et
(iii) on coule cette seconde composition de béton dans un coffrage.

2. Procédé selon la revendication 1, dans lequel le système accélérateur comprend, en poids:
| | |
|---|---|
| Alumine Al2O3 : | 35 à 50% |
| Chaux CaO: | 10 à 50% |
| Sulfate (exprimé en SO3): 5 | à 30%. |

3. Procédé selon l'une des revendications 1 à 2, dans lequel le sulfate est choisi parmi les sulfates métalliques, alcalins, alcalino-terreux, les sulfates organiques ou leurs mélanges.

4. Procédé selon l'une des revendications 1 à 3, dans lequel l'étape (i) est une étape de gâchage dans laquelle on réalise la première composition de béton et qui comprend les étapes suivantes:
(a) on réalise une composition de béton comprenant,
- du ciment Portland;
- le système retardateur; et
- le superplastifiant; puis
(b) on ajoute le système accélérateur.

5. Procédé selon l'une des revendications 1 à 4, dans lequel l'étape (ii) est mise en oeuvre à partir de 10 minutes, de préférence à partir de 60 minutes et au plus tard 8 heures après le gâchage de l'étape (i).

6. Procédé selon l'une des revendications 1 à 5, dans lequel l'étape (ii) est mise en oeuvre immédiatement avant l'étape (iii) de coulage du béton.

7. Procédé selon l'une des revendications 1 à 3, comprenant les étapes suivantes:
(i) on réalise par gâchage dans une centrale à béton la première composition de béton comprenant un liant rapide; puis
(ii) on ajoute le système déclencheur; et
(iii) on coule immédiatement le béton après l'étape (ii) d'ajout du système déclencheur.

8. Procédé selon la revendication 6 ou 7, dans lequel l'étape (ii) est mise en oeuvre dans un camion-toupie.

9. Procédé selon l'une des revendications 1 à 8, dans lequel l'étape (iii) de coulage de seconde composition de béton dans le coffrage se fait avec une seconde composition de béton présentant une valeur d'affaissement au slump test de 15 à 24 cm, de préférence de 18 à 22 cm.

10. Procédé selon l'une des revendications 1 à 9, dans lequel l'étape (iii) de coulage de la seconde composition de béton dans le coffrage se fait avec une seconde composition de béton présentant une valeur d'étalement au slumpflow de 580 à 750 mm, de préférence de 650 à 750 mm.

11. Procédé selon l'une des revendications 1 à 10, pour la réalisation de voiles béton ou dalles béton.

12. Procédé selon l'une des revendications 1 à 11, dans lequel le ciment portland est un ciment conforme à la norme EN 197-1, avantageusement un ciment rapide (dit de type R), préférentiellement broyé à une finesse d'au moins 4000 cm²/g, type HRI (à Haute Résistance Initiale), par exemple un ciment CEM1 52.5 N ou R, CEM2 de type 32.5, 32.5 R, 42.5 ou 42.5 R, avec le taux d'alcalins solubles de préférence inférieur à 1 % en poids exprimé en équivalent Na₂O.

13. Procédé selon l'une des revendications 1 à 12, dans lequel le système accélérateur comprend un ciment à base d'aluminate de calcium et du sulfate de calcium sous forme semi-hydrate, dihydrate ou anhydrite.

14. Procédé selon l'une des revendications 1 à 13, dans lequel l'aluminate de calcium utilisé comprend des phases CA et/ou C3A et/ou C12A7.

15. Procédé selon l'une des revendications 3 à 12, dans lequel le rapport massique entre l'aluminate de calcium et le sulfate de calcium est compris entre 1:4 et 4:1, préférentiellement entre 2:1 et 1:2.

16. Procédé selon l'une des revendications 1 à 15, dans lequel le système retardateur est un acide carboxylique ou borique, en particulier l'acide citrique ou tartrique ou gluconique, l'acide étant éventuellement sous la forme d'un sel, en combinaison avec éventuellement un autre additif minéral apportant ou consommant du calcium, par exemple carbonates ou fluorures de sodium, potassium, lithium, strontium ou baryum, ou encore les complexants du calcium comme l'EDTA.

17. Procédé selon l'une des revendications 1 à 16 dans lequel la quantité du système retardateur, en poids par rapport au poids cumulé du ciment portland et du système accélérateur, est de 0,05 à 5% et de préférence de 0,1 à 1 %.

18. Procédé selon l'une des revendications 1 à 17, dans lequel la quantité du superplastifiant, en poids par rapport au poids cumulé de ciment portland et du système accélérateur, est de 0,5 à 5%, préférentiellement de 1 à 3%.

19. Procédé selon l'une des revendications 1 à 18, dans lequel la quantité du déclencheur, en poids par rapport au poids cumulé de ciment portland et du système accélérateur, est de 1 à 10%, préférentiellement de 2 à 5%.

20. Procédé selon l'une des revendications 1 à 19, dans lequel la seconde composition de béton présente une résistance mécanique en compression RC d'au moins 1MPa, 2h après l'étape (ii).

21. Procédé selon l'une des revendications 1 à 20, dans lequel la seconde composition de béton présente une résistance mécanique en compression RC d'au moins 1MPa, 4h après l'étape (i).

22. Procédé selon l'une des revendications 1 à 21, dans lequel la première composition de béton a une durée de maintien de l'ouvrabilité d'au minimum 1 heure après l'étape (i).

23. Procédé selon l'une des revendications 1 à 22, dans lequel la seconde composition de béton a une durée de maintien d'ouvrabilité d'au minimum 30 minutes après l'étape (ii).

## Patentansprüche

1. Verfahren zur Herstellung von Betonteilen und -bauwerken, umfassend die folgenden Schritte:
(i) Bereitstellen einer ersten Betonzusammensetzung auf der Basis eines schnellen Bindemittels, umfassend:
- 70 bis 85 Gew.-% Portlandzement;
- 10 bis 25 Gew.-% eines Beschleunigersystems auf der Basis von Aluminiumoxid Al₂O₃, Calciumoxid CaO und Sulfat SO₃ in Form von Calciumaluminat und Calciumsulfat;
- ein Verzögerungssystem; und
- ein Fließmittel, das ein Polymer des Typs Polyphosphonat-Polyox oder ein Gemisch von Polymeren des Typs Polyphosphonat-Polyox und des Typs Polycarboxylat-Polyox umfasst;
wobei das Gewichtsverhältnis von wirksamem Wasser zu trockenem Bindemittel im Bereich von 0,35 bis 0,50 liegt, dann
(ii) Hinzufügen eines Auslösersystems unter Bildung einer zweiten Betonzusammensetzung, das aus der Gruppe ausgewählt ist, die aus Folgenden besteht:
- einer wässrigen Suspension, umfassend:
(i) wenigstens ein Calciumaluminat;
(ii) 0,5 bis 4 Gew.-%, vorzugsweise 0,6 bis 2,3 Gew.-%, eines Abbindeinhibitors für Tonerdezemente, bezogen auf das Gesamtgewicht des oder der Calciumaluminate; und
(iii) wenigstens ein Absetzverhinderungsmittel;
- einer Übergangstonerde;
- einem Aluminiumhydroxid-Gel;
- einem Gemisch derselben; und
(iii) Gießen dieser zweiten Betonzusammensetzung in eine Schalung.

2. Verfahren gemäß Anspruch 1, wobei das Beschleunigersystem Folgendes umfasst:
| | |
|---|---|
| Aluminiumoxid Al₂O₃: | 35 bis 50 Gew.-% |
| Calciumoxid CaO: | 10 bis 50 Gew.-% |
| Sulfat (ausgedrückt als SO₃): | 5 bis 30 Gew.-%. |

3. Verfahren gemäß einem der Ansprüche 1 bis 2, wobei das Sulfat aus Metallsulfaten, Alkalimetallsulfaten, Erdalkalimetallsulfaten, organischen Sulfaten oder deren Gemischen ausgewählt ist.

4. Verfahren gemäß einem der Ansprüche 1 bis 3, wobei Schritt (i) ein Anrührschritt ist, bei dem die erste Betonzusammensetzung hergestellt wird und der die folgenden Schritte umfasst:
(a) Herstellen einer Betonzusammensetzung, umfassend
- Portlandzement;
- das Verzögerungssystem; und
- das Fließmittel; dann
(b) Hinzufügen des Beschleunigersystems.

5. Verfahren gemäß einem der Ansprüche 1 bis 4, wobei Schritt (ii) ab 10 Minuten, vorzugsweise ab 60 Minuten und spätestens 8 Stunden nach dem Anrühren von Schritt (i) durchgeführt wird.

6. Verfahren gemäß einem der Ansprüche 1 bis 5, wobei Schritt (ii) unmittelbar vor Schritt (iii) des Gießens des Betons durchgeführt wird.

7. Verfahren gemäß einem der Ansprüche 1 bis 3, das die folgenden Schritte umfasst:
(i) Herstellen der ersten Betonzusammensetzung, die ein schnelles Bindemittel umfasst, durch Anrühren in einem Fertigbetonwerk; dann
(ii) Hinzufügen des Auslösersystems; und
(iii) Gießen des Betons unmittelbar nach Schritt (ii) des Hinzufügens des Auslösersystems.

8. Verfahren gemäß Anspruch 6 oder 7, wobei Schritt (ii) in einem Fahrmischer durchgeführt wird.

9. Verfahren gemäß einem der Ansprüche 1 bis 8, wobei Schritt (iii) des Gießens der zweiten Betonzusammensetzung in die Schalung mit einer zweiten Betonzusammensetzung erfolgt, die im Setzversuch ein Setzmaß von 15 bis 24 cm, vorzugsweise 18 bis 22 cm, aufweist.

10. Verfahren gemäß einem der Ansprüche 1 bis 9, wobei Schritt (iii) des Gießens der zweiten Betonzusammensetzung in die Schalung mit einer zweiten Betonzusammensetzung erfolgt, die im Ausbreitversuch ein Ausbreitmaß von 580 bis 750 mm, vorzugsweise 650 bis 750 mm, aufweist.

11. Verfahren gemäß einem der Ansprüche 1 bis 10 zur Herstellung von Betonwänden oder Betonplatten.

12. Verfahren gemäß einem der Ansprüche 1 bis 11, wobei der Portlandzement ein Zement gemäß der Norm EN 197-1 ist, vorteilhafterweise ein Schnellzement (vom sogenannten Typ R), vorzugsweise gemahlen zu einer Feinheit von wenigstens 4000 cm²/g, Typ HRI (mit hoher Anfangsfestigkeit), zum Beispiel ein Zement CEM1 52,5 N oder R, CEM2 des Typs 32,5, 32,5 R, 42,5 oder 42,5 R, mit einem Gehalt an löslichen Alkalien von vorzugsweise weniger als 1 Gew.-%, ausgedrückt als Na₂O-Äquivalent.

13. Verfahren gemäß einem der Ansprüche 1 bis 12, wobei das Beschleunigersystem einen Zement auf der Basis von Calciumaluminat und Calciumsulfat in Form von Hemihydrat, Dihydrat oder Anhydrit umfasst.

14. Verfahren gemäß einem der Ansprüche 1 bis 13, wobei das verwendete Calciumaluminat CA- und/oder C3A- und/oder C12A7-Phasen umfasst.

15. Verfahren gemäß einem der Ansprüche 3 bis 12, wobei das Massenverhältnis zwischen Calciumaluminat und Calciumsulfat im Bereich von 1:4 bis 4:1, vorzugsweise 2:1 bis 1:2, liegt.

16. Verfahren gemäß einem der Ansprüche 1 bis 15, wobei es sich bei dem Verzögerungssystem um eine Carbon- oder Borsäure, insbesondere Zitronen- oder Wein- oder Gluconsäure, wobei die Säure gegebenenfalls in Form eines Salzes vorliegt, in Kombination mit gegebenenfalls einem anderen mineralischen Additiv, das Calcium zuführt oder verbraucht, zum Beispiel Carbonate oder Fluoride von Natrium, Kalium, Lithium, Strontium oder Barium, oder auch Calcium-Komplexbildner, wie EDTA, handelt.

17. Verfahren gemäß einem der Ansprüche 1 bis 16, wobei die Menge des Verzögerungssystems, bezogen auf das kumulierte Gewicht des Portlandzements und des Beschleunigersystems, 0,05 bis 5 Gew.-% und vorzugsweise 0,1 bis 1 Gew.-% beträgt.

18. Verfahren gemäß einem der Ansprüche 1 bis 17, wobei die Menge des Fließmittels, bezogen auf das kumulierte Gewicht des Portlandzements und des Beschleunigersystems, 0,5 bis 5 Gew.-%, vorzugsweise 1 bis 3 Gew.-%, beträgt.

19. Verfahren gemäß einem der Ansprüche 1 bis 18, wobei die Menge des Auslösers, bezogen auf das kumulierte Gewicht des Portlandzements und des Beschleunigersystems, 1 bis 10 Gew.-%, vorzugsweise 2 bis 5 Gew.-%, beträgt.

20. Verfahren gemäß einem der Ansprüche 1 bis 19, wobei die zweite Betonzusammensetzung 2 h nach Schritt (ii) eine mechanische Druckfestigkeit RC von wenigstens 1 MPa aufweist.

21. Verfahren gemäß einem der Ansprüche 1 bis 20, wobei die zweite Betonzusammensetzung 4 h nach Schritt (i) eine mechanische Druckfestigkeit RC von wenigstens 1 MPa aufweist.

22. Verfahren gemäß einem der Ansprüche 1 bis 21, wobei die erste Betonzusammensetzung nach Schritt (i) eine Verarbeitungsdauer von wenigstens 1 Stunde aufweist.

23. Verfahren gemäß einem der Ansprüche 1 bis 22, wobei die zweite Betonzusammensetzung nach Schritt (ii) eine Verarbeitungsdauer von wenigstens 30 Minuten aufweist.

## Claims

1. Method for concrete parts and structures, which comprises:
(i) supplying a first concrete composition based on a quick binder containing:
- 70 to 85% by weight of Portland cement;
- 10 to 25% by weight of a curing accelerator system based on alumina Al₂O₃, lime CaO and sulfate SO₃ in the form of calcium aluminate or calcium sulfate;
- a retarder system; and
- a superplasticizer comprising a polyphosphonate polyox type polymer, or a mixture of polymers of the type polyphosphonate polyox and polycarboxylate polyox, the weight ratio efficient water on dry binder is between 0,35 to 1,50;
(ii) then adding a releaser system to form a second concrete composition selected from the group consisting in:
- an aqueous suspension comprising : at least one calcium aluminate, (ii) from 0,5 to 4%, preferably from 0,6 to 2,3%, by weight relative to the total weight of the calcium aluminate(s), of a setting inhibitor of the aluminous cements, and (iii) at least one settling-preventing agent;
- a transition alumina;
- an alumina hydroxide gel;
- a mixture thereof; and
(iii) pouring this second concrete composition in a concrete form.

2. Method according to claim 1, wherein the curing accelerator system comprises, in weight:
| | |
|---|---|
| alumina Al₂O₃ : | 35 to 50% CaO; |
| lime CaO: | 10 to 50% |
| sulfate (expressed in SO₃): | 5 to 30%. |

3. Method according to claim 1 or claim 2, wherein the sulfate is selected among the metallic, alkaline, alkaline-earth sulfates, the organic sulfates or the mixtures thereof.

4. Method according to any one of the preceding claims 1 to 3, wherein the step (i) is a wet mixing step wherein the first primary composition is prepared and which comprises the following steps:
(a) preparing a concrete composition comprising : Portland cement; the retarder system and the superplasticizer; then
(b) adding the accelerator system.

5. Method according to any one of the preceding claims 1 to 4, wherein the step (ii) is implemented at least 10 minutes, preferably at least 60 minutes but no later than 8 hours after wet mixing of the step (i).

6. Method according to any one of the preceding claims 1 to 5, wherein the step (ii) is implemented immediately before the concrete pouring step (iii).

7. Method according to any one of the preceding claims 1 to 3, comprising the following steps:
(i) supplying by wet mixing in a ready-mix plant the first concrete composition based on a quick binder; then
(ii) adding the releaser system; and
(iii) pouring the concrete immediately after the releaser system addition step (ii).

8. Method according to claim 6 or claim 7, wherein the step (ii) is implemented in a truck-mixer.

9. Method according to any one of the preceding claims 1 to 8, wherein the step (iii) comprising pouring the second concrete composition in a concrete form is conducted with a second concrete composition exhibiting a slump test value ranging between 15 and 24 cm, preferably between 18 and 22 cm.

10. Method according to any one of the preceding claims 1 to 9, wherein the step (iii) comprising pouring the second concrete composition in a concrete form is conducted with a second concrete composition exhibiting a slumpflow value ranging between 580 and 750 mm, preferably between 650 and 750 mm.

11. Method according to any one of the preceding claims 1 to 10, for the realisation of concrete shells or concrete slabs.

12. Method according to any one of the preceding claims 1 to 11, wherein the Portland cement is a cement complying with the EN 197-1 standard, advantageously a quick cement (so-called R type), preferably crushed to a fineness of at least 4000 cm²/g, such as HIR (high initial strength), for instance CEM1 52.5 N or R cement, 32.5, 32.5 R, 42.5 or 42.5 R type CEM2, with the ratio of soluble alkalines preferably lower than 1% in weight expressed in Na₂O equivalent.

13. Method according to any one of the preceding claims 1 to 12, wherein the curing accelerator system is based on calcium aluminate and calcium sulfate in semi-hydrate, dihydrate or anhydrite form.

14. Method according to any one of the preceding claims 1 to 13, wherein the calcium aluminate used includes CA and/or C3A and/or C12A7 phases.

15. Method according to any one of the preceding claims 3 to 12, wherein the mass ratio between the calcium aluminate and the calcium sulfate ranges between 1:4 and 4:1, preferably between 2:1 and 1:2.

16. Method according to any one of the preceding claims 1 to 15, wherein the retarder system is carboxylic or boric acid, in particular citric or tartaric or gluconic acid, wherein acid is optionally in the form of a salt, in combination optionally with another mineral additive providing or using calcium, for instance sodium, potassium, lithium, strontium or barium carbonates or fluorides, or still calcium complexing agents such as EDTA.

17. Method according to any one of the preceding claims 1 to 16, wherein the amount of the retarder system, in weight relative to the cumulated weight of the Portland cement and of the curing accelerator system, ranges between 0,05 and 5% and preferably 0,1 and 1 %.

18. Method according to any one of the preceding claims 1 to 17, wherein the amount of the superplasticizer, in weight relative to the cumulated weight of the Portland cement and of the curing accelerator system, ranges between 0,5 and 5%, preferably 1 and 3%.

19. Method according to any one of the preceding claims 1 to 18, wherein the amount of the releaser, in weight relative to the cumulated weight of the Portland cement and of the curing accelerator system, is 1 to 10%, preferably 2 to 5%.

20. Method according to any one of the preceding claims 1 to 19, wherein the second concrete composition exhibits a compression mechanical strength RC of at least 1 MPa, 2 h after the step (ii).

21. Method according to any one of the preceding claims 1 to 20, wherein the second concrete composition exhibits a compression mechanical strength RC of at least 1 MPa, 4 h after the step (i).

22. Method according to any one of the preceding claims 1 to 21, wherein the first concrete composition has a workability keeping time of at least 1 hour after step (i).

23. Method according to any one of the preceding claims 1 to 22, wherein the second concrete composition has a workability keeping time of at least 30 minutes after step (ii).
